(19) Europäisches Patentamt
European Patent Office
Office européen des brevets

(11) EP 3 604 959 B1

(12) **EUROPEAN PATENT SPECIFICATION**

(45) Date of publication and mention
of the grant of the patent:
**17.04.2024   Bulletin 2024/16**

(21) Application number: **18894774.1**

(22) Date of filing: **09.02.2018**

(51) International Patent Classification (IPC):
**F24F 11/65** (2018.01)    **F24F 11/64** (2018.01)
**F24F 11/79** (2018.01)    **F24F 11/86** (2018.01)
**F24F 11/77** (2018.01)    F24F 110/10 (2018.01)
F24F 140/20 (2018.01)

(52) Cooperative Patent Classification (CPC):
**F24F 11/65; F24F 11/77; F24F 11/79; F24F 11/86;**
F24F 11/80; F24F 2110/10; F24F 2140/20;
Y02B 30/70

(86) International application number:
**PCT/CN2018/076069**

(87) International publication number:
**WO 2019/127862 (04.07.2019 Gazette 2019/27)**

(54) **AUTOMATIC WIND-FREE CONTROL METHOD AND DEVICE, AND COMPUTER READABLE STORAGE MEDIUM**

VERFAHREN UND VORRICHTUNG ZUR AUTOMATISCHEN WINDFREIEN STEUERUNG UND COMPUTERLESBARES SPEICHERMEDIUM

PROCÉDÉ ET DISPOSITIF DE COMMANDE SANS VENT AUTOMATIQUE ET SUPPORT D'INFORMATIONS LISIBLE PAR ORDINATEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.12.2017   CN 201711499075
28.12.2017   CN 201711464660**

(43) Date of publication of application:
**05.02.2020   Bulletin 2020/06**

(73) Proprietors:
• **GD Midea Air-Conditioning Equipment Co., Ltd.**
**Foshan, Guangdong 528311 (CN)**
• **Midea Group Co., Ltd.**
**Foshan, Guangdong 528311 (CN)**

(72) Inventor: **QU, Jinxiang**
**Foshan, Guangdong 528311 (CN)**

(74) Representative: **RGTH**
**Patentanwälte PartGmbB**
**Neuer Wall 10**
**20354 Hamburg (DE)**

(56) References cited:
EP-A1- 2 253 898        EP-A1- 3 184 925
WO-A1-2017/109906       CN-A- 104 949 294
CN-A- 105 352 159       CN-A- 105 485 865
CN-A- 106 196 408       CN-A- 106 196 408
JP-A- 2017 187 247      JP-B1- 6 065 959
JP-B2- 6 222 211

EP 3 604 959 B1

## Description

### FIELD

The present invention relates to the technical field of air conditioner, and more particularly relates to a method for controlling automatic breezeless mode, a device for controlling automatic breezeless mode, and a computer-readable storage medium.

### BACKGROUND

Air conditioners can help adjust indoor temperature in the hot summer, so as to provide an environment suitable for learning or working, which is conductive for people's physical and mental health, as well as work efficiency. However, if users are directly faced with cool air blown out from the air conditioner for a long time, especially part of the skin is exposed to air when users are sleeping, it is not only easy to make users feel discomfort, but also likely to cause diseases such as cold or frozen shoulder. In addition, users often feel wind blown out from the air outlet of the air conditioner when the air conditioner is cooling. This phenomenon is referred to as wind feeling, and is more likely to occur when the indoor environment is comfortable or a little cold, thereby causing discomfort.

The above content is merely used to assist in understanding the technical solutions of the present disclosure and is not intended to represent that the above content is prior art.
JP6065959 B1 discloses an air-conditioning indoor unit capable of suppressing blow-up of air-flow flowing along a floor surface, even when the floor surface is not sufficiently heated. In the air-conditioning indoor unit a temperature of air-flow flowing along a floor surface from a wall surface of a wall air-flow mode, is lowered by lowering a temperature of blown-out air, blow-up of the air-flow flowing along the floor surface can be suppressed in comparison with a conventional one even when the floor surface is not sufficiently heated. CN 104949294 A discloses a control method, a control system and an air conditioner, wherein the control method comprises the following steps: when the fact that the indoor environment temperature reaches the target temperature is detected, the wind speed of an air blower of the air conditioner is adjusted to the target wind speed; after the wind speed of the air blower of the air conditioner is adjusted to the target wind speed, the air outlet temperature of the air outlet of the air conditioner is controlled;

### SUMMARY

The present disclosure provides a method for controlling automatic breezeless mode, a device for controlling automatic breezeless mode, and a computer-readable storage medium, aiming to solve the problem that in the prior art users will feel wind when the indoor unit of the air conditioner is cooling.

It is an object of the present disclosure to provide a method for controlling automatic breezeless mode, wherein breezeless mode refers to that an indoor temperature has dropped, reaching or approaching a set temperature of an air conditioner, a fan speed and a compressor frequency of the air conditioner are controlled to decrease, so as to maintain the current indoor temperature and minimize user's feeling of cold wind, including the following steps:

in response to an air conditioner entering an automatic breezeless mode, obtaining a first indoor operating parameter being a room temperature and a second indoor operating parameter being an evaporator coil temperature according to a preset frequency, and obtaining an outlet air temperature based on the first indoor operating parameter and the second indoor operating parameter;
determining a current temperature change trend based on the first indoor operating parameter; and obtaining a set temperature of the air conditioner, and performing a corresponding control action for the automatic breezeless mode based on a relationship among the set temperature, the temperature change trend, and the outlet air temperature.

In the present disclosure, when the air conditioner enters the automatic breezeless mode, the first indoor operating parameter and the second indoor operating parameter are obtained according to the preset frequency, the outlet air temperature is obtained based on the first indoor operating parameter and the second indoor operating parameter. The current temperature change trend is determined based on the first indoor operating parameters. The set temperature of the air conditioner is obtained. Then, the corresponding control action for the automatic breezeless mode is performed based on the relationship among the set temperature, the temperature change trend, and the outlet air temperature. In accordance with the present disclosure, when the air conditioner enters the automatic breezeless mode, the corresponding control action for the automatic breezeless mode is performed based on the relationship among the set temperature, the temperature change trend and the outlet air temperature, where the control action for the automatic breezeless mode mainly includes controlling opening and closing of the upper and lower vertical air guiding strips, the compressor frequency and the fan speed, so as to allow the air blown from the indoor unit of the air conditioner more comfortable and intelligent, thereby improving user experience.

### BRIEF DESCRIPTION OF THE DRAWINGS

FIG. 1 is a structure diagram illustrating a terminal to which a device for controlling automatic breezeless mode belongs in a hardware operating environment according to an embodiment of the present disclosure;

FIG. 2 is a flowchart diagram illustrating a method for controlling automatic breezeless mode according to a first embodiment of the present disclosure;

FIG. 3 is a flowchart diagram illustrating changes in an outlet air temperature over time, when the indoor temperature is in a downward trend and Ts is less than 24°C or the indoor temperature is on an upward trend and Ts is less than 25°C, according to the first embodiment;

FIG. 4 is a flowchart diagram illustrating changes in an outlet air temperature over time, when the indoor temperature is in a downward trend and Ts is equal to or more than 24°C, and Ts is less than 26°C, or the indoor temperature is on an upward trend, and Ts is equal to or more than 25°C, and Ts is less than 27°C in the first embodiment;

FIG. 5 is a flowchart diagram illustrating changes in an outlet air temperature over time, when the indoor temperature is in a downward trend 26°C≤Ts<28°C or the indoor temperature is on an upward trend and Ts is equal to or more than 27°C, and Ts is less than 29°C in the first embodiment;

FIG. 6 is a flowchart diagram illustrating changes in an outlet air temperature over time, when the indoor temperature is in a downward trend and Ts is no less than 28°C or the indoor temperature is on an upward trend and Ts is no less than 29°C in the first embodiment;

FIG. 7 is a flowchart diagram illustrating a method for controlling automatic breezeless mode according to a second embodiment of the present disclosure;

FIG. 8 is a flowchart diagram illustrating the operation of determine the current temperature change trend based on the obtained first indoor parameter in a method for controlling automatic breezeless mode according to a third embodiment of the present disclosure;

FIG. 9 is a flowchart diagram illustrating the operation of obtaining a set temperature of the air conditioner, and performing a corresponding control action for the automatic breezeless mode based on a relationship among the set temperature, the temperature change trend, and the outlet air temperature in a method for controlling automatic breezeless mode according to a fourth embodiment of the present disclosure.

The realizing of the aim, functional characteristics and advantages of the present disclosure are further described in detail with reference to the accompanying drawings and the embodiments.

**DETAILED DESCRIPTION OF THE EMBODIMENTS**

It will be appreciated that the specific embodiments described herein are merely illustrative of the present disclosure and are not intended to limit the present disclosure.

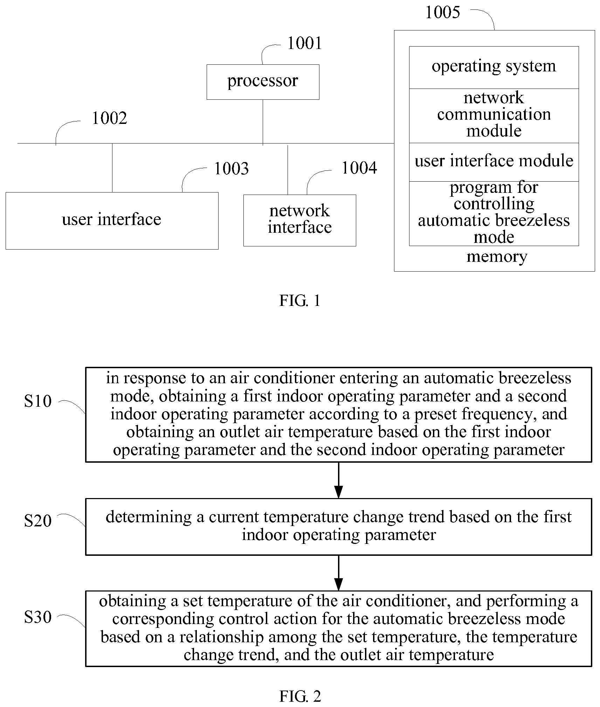

FIG. 1 is a structure diagram illustrating a terminal to which a device for controlling automatic breezeless mode belongs in a hardware operating environment according to an embodiment of the present disclosure.

The terminal in the embodiment of the present disclosure may be a personal computer (PC), or may be a mobile terminal device having a display function, such as a smart phone, a tablet computer, an e-book reader, an MP3 (Moving Picture Experts Group Audio Layer III) player, an MP4 (Moving Picture Experts Group Audio Layer IV) player, a portable computer, and so on.

As shown in Fig. 1, the terminal may include: a processor 1001, such as CPU, a network interface 1004, a user interface 1003, a memory 1005, and a communication bus 1002. The communication bus 1002 is configured to facilitate connection and communication between these components. The user interface 1003 may include a display, an input unit such as a keyboard, and an optional user interface 1003 may also include a standard wired interface and wireless interface. The network interface 1004 may optionally include a standard wired interface, and a wireless interface (such as a WI-FI interface). The memory 1005 may be a high-speed RAM memory, or a non-volatile memory such as a disk memory. The memory 1005 optionally may also be a storage device that is separate from the processor 1001 described above.

Optionally, the terminal may also include a camera, a RF (Radio Frequency) circuitry, a sensor, an audio circuitry, a WiFi module, and the like. The sensor is such as a light sensor, a motion sensor or other sensor. Specifically, the light sensor may include an ambient light sensor and a proximity sensor, wherein, the ambient light sensor can adjust the brightness of the display according to the light of the ambient light, and the proximity sensor can turn off the display and/or the backlight when the mobile terminal moves to the ear. As one kind of the motion sensor, a gravity acceleration sensor can detect the magnitude of acceleration in each direction (usually three axes), and can detect the magnitude and direction of gravity when stationary, as well as can be used to identify the posture of the mobile terminal (such as horizontal and vertical screen switching, related games, magnetometer attitude calibration), vibration recognition related functions (such as pedometer, tapping), and so on. Of course, the mobile terminal can also be equipped with other sensors such as a gyroscope, a barometer, a hygrometer, a thermometer, an infrared sensor, and the like. Thus, they are not to be detailed herein again.

Those skilled in the art can understand that the structure of the terminal illustrated in FIG. 1 does not constitute a limitation on the terminal. Thus, the terminal may include more or less components than those illustrated, or some components to be combined, or different arrangements of components.

As shown in FIG. 1, the memory 1005 as a computer storage medium may include an operation system, a network communication module, a user interface module and a user behavior data processing program.

In the terminal shown in FIG. 1, the network interface 1004 is mainly configured to connect a background server and communicate data with the background server; the user interface 1003 is mainly configured to connect the client (user side) and communicate data with the client; and the processor 1001 may be configured to execute the user behavior data processing program stored in the memory 1005.

In the embodiment, the device for controlling automatic breezeless mode includes: a memory 1005, a processor 1001 and a program for automatic control of breezeless mode stored in the memory 1005 and executable by the processor 1001, wherein, the processor 1001 is configured to execute the program for automatic control of breezeless mode to perform the following operations: in response to an air conditioner entering an automatic breezeless mode, obtaining a first indoor operating parameter and a second indoor operating parameter according to a preset frequency, and obtaining an outlet air temperature based on the first indoor operating parameter and the second indoor operating parameter; determining a current temperature change trend based on the first indoor operating parameter; and obtaining a set temperature of the air conditioner, and performing a corresponding control action for the automatic breezeless mode based on a relationship among the set temperature, the temperature change trend, and the outlet air temperature.

The present disclosure provides a first embodiment of a method for controlling automatic breezeless mode, referring to FIG. 2, which is a flowchart diagram illustrating a method for controlling automatic breezeless mode according to a first embodiment of the present disclosure, the method including:

Step S10, in response to an air conditioner entering an automatic breezeless mode, obtaining a first indoor operating parameter and a second indoor operating parameter according to a preset frequency, and obtaining an outlet air temperature based on the first indoor operating parameter and the second indoor operating parameter.

The outlet air temperature of the air conditioner refers to a real-time temperature of cool air blown from the indoor unit of the air conditioner, and in this embodiment, the outlet air temperature is calculated by a formula based on the indoor operating parameters T1 and T2, where the formula is:

$$Ta = -0.534 + T1*0.853 + T2*0.146$$

In the above formula, T1 is an indoor ambient temperature, and T2 is an evaporator coil temperature. The indoor ambient temperature T1 is measured by a temperature sensor arranged on the indoor unit of the air conditioner. The evaporator coil is also called a copper tube. The copper tube and a aluminum foil constitute a heat exchanger having a string-type structure. The temperature of the copper tube is measured by a temperature sensor arranged on the copper tube. The indoor ambient temperature T1 is the first indoor operating parameter, and the evaporator coil temperature T2 is the second indoor operating parameter.

The preset frequency may be set by technicians, according to which the first indoor operating parameter and the second indoor operating parameter are obtained multiple times at regular intervals. For example, the indoor ambient temperature T1 and the evaporator coil temperature T2 may be obtained by the temperature sensors respectively arranged on the indoor unit and the copper tube every 1 minute or 0.5 minutes, and the outlet air temperature Ta of the indoor unit is then calculated based on the obtained temperatures.

Step S20, determining a current temperature change trend based on the first indoor operating parameter.

The currently obtained first indoor operating parameter is compared with the previously obtained first indoor operating parameter, after the first indoor operating parameters are obtained. If the currently obtained first indoor operating parameter is larger than the previously obtained first indoor operating parameter, the current temperature change trend is determined to be an upward trend; and if the currently obtained first indoor operating parameter is smaller than the previously obtained first indoor operating parameter, the current temperature change trend is determined to be a downward trend.

Step S30, obtaining a set temperature of the air conditioner, and performing a corresponding control action for the automatic breezeless mode based on a relationship among the set temperature, the temperature change trend, and the outlet air temperature.

The set temperature of the air conditioner refers to a target indoor temperature set by users via a remote controller or other means to the air conditioner. The set temperature of the air conditioner reflects user's wishes and represents the target temperature of the air conditioner. The breezeless mode refers to that as the indoor temperature has dropped, reaching or approaching the set temperature, the fan speed and the compressor frequency are controlled to decrease, so as to maintain the current indoor temperature and minimize user's feeling of cold wind. The control action for the automatic breezeless mode in response to the on state of the breezeless mode is mainly to perform cooling function from three aspects of the vertical air guiding strip, the compressor and the fan. In response to the air conditioner entering the automatic breezeless mode, the vertical air guiding strips are closed and the wind is blown from mini holes in the closed air guiding strips, thereby realizing a breezeless effect. In addition, the breezeless mode includes an upper breezeless mode and a lower breezeless mode. When the upper breezeless mode is on, the upper vertical air guiding strips are closed, the compressor frequency is limited to 35 Hz, and the fan speed is controlled to be no more than 35% in case of automatic wind. When the lower breezeless mode is on, the lower vertical air guiding strips are closed, the compressor frequency is limited to 40 Hz, and the fan speed is controlled to be no more than 45% in case of automatic wind. When the upper and lower breezeless modes are both on, the upper and lower vertical air guiding strips are both closed, the compressor frequency is limited to the minimum frequency, and the fan speed is controlled to be no more than 35% in case of automatic wind. The upper area of the air conditioner is relatively high, and the air supply distance is relatively far, thus cooling effect in the upper breezeless mode is better than that in the lower breezeless mode. The frequency and the fan speed in the upper breezeless mode can be set lower than the frequency and the fan speed in the lower breezeless mode, realizing the same cooling effect. In this embodiment, the indoor unit has three sections of air guiding plates, including upper, middle, and lower air guiding plates, wherein the upper vertical air guiding strip corresponds to the upper air guiding plate, the lower vertical air guiding strip corresponds to the middle air guiding plate and the lower air guiding plate.

The control action corresponding to the on state of the upper breezeless mode includes that the upper vertical air guiding strip is closed, the compressor frequency and the fan speed are limited below a certain level, which may be set by technicians. For example, the compressor frequency is limited to 35Hz, and the fan speed is controlled to be no more than 35% in case of automatic wind. The control action corresponding to the on state of the lower breezeless mode includes that the lower vertical air guiding strip is closed, the compressor frequency and the fan speed are limited below a certain level, which may be set by technicians. For example, the compressor frequency is limited to 40Hz, and the fan speed is controlled to be no more than 45% in case of automatic wind. The control action corresponding to the on state of both the upper and lower breezeless modes includes that the upper vertical air guiding strip and the lower vertical air guiding strip are both closed, the compressor frequency and the fan speed are limited below a certain level, which may be set by technicians. For example, the compressor frequency is limited to the minimum frequency, and the fan speed is controlled to be no more than 35% in case of automatic wind.

a) The corresponding control action for the automatic breezeless mode is determined according to the set temperature Ts of the air conditioner and the outlet temperature Ta of the air outlet, when the current indoor temperature change trend is the upward trend.

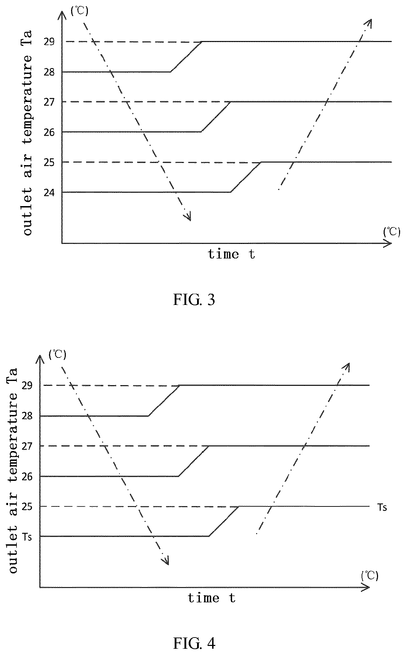

1) when Ts is less than 25°C, as shown in FIG. 3:

when Ta is more than 29°C, the upper and lower breezeless modes are both off, namely the upper and lower vertical air guiding strips are both open, the fan speed is set to be under automatic control;
when Ta is more than 27°C and no more than 29°C (27°C < Ta ≤ 29°C), the lower breezeless mode is on and the upper breezeless mode is on, namely the upper vertical air guiding strip is open while the lower vertical air guiding strip is off, the compressor frequency and the fan speed are limited below a certain level, which may be set by technicians. For example, the compressor frequency is limited to 40Hz, and the fan speed is controlled to be no more than 45% in case of automatic wind, referring to the specific action rule corresponding to that the lower breezeless mode is on;
when Ta is more than 25°C and no more than 27°C (25°C < Ta ≤ 27°C), the upper breezeless mode and the lower breezeless mode are alternately turned on and off, namely the upper vertical air guiding strip and the lower vertical air guiding strip are alternately open and closed. Specifically, the upper breezeless mode is on and running for a first preset duration; the upper breezeless mode is off, the lower breezeless mode is on and running for a second preset duration; then the lower breezeless mode is off, the upper breezeless mode is on and running for another first preset duration, LOOP through the above steps until Ta is less than 25°C. For example, when 25°C < Ta ≤ 27°C, the upper breezeless mode and the lower breezeless mode are alternately on and off. First, the upper breezeless mode is on and running for a duration t1=120s; and the upper breezeless mode is off, the lower breezeless mode is on and running for a duration t2=60s; then the lower breezeless mode is off, the upper breezeless mode is on, LOOP through the above steps until Ta is less than 25°C, referring to the specific action rules when the lower breezeless mode is on and when the lower breezeless mode is on; and
when Ta is less than 25°C (Ta < 25°C), the upper and lower breezeless modes are both on, referring to the specific action rule corresponding to that the upper and lower breezeless modes are both on.

2) 25°C ≤ Ts < 27°C, as shown in FIG. 4:

when Ta > 29°C, the upper and lower breezeless modes are both off, namely the upper and lower vertical air guiding strips are both open, and the fan speed is set to be under automatic control; when 27°C < Ta ≤ 29°C, the lower breezeless mode is on and the upper breezeless mode is off, referring to the specific action rule corresponding to that the lower breezeless mode in on;

when Ts < Ta ≤ 27°C, the upper breezeless mode and the lower breezeless mode are alternately turned on and off, namely the upper vertical air guiding strip and the lower vertical air guiding strip are alternately open and closed. Specifically, the upper breezeless mode is on and running for a first preset duration; and the upper breezeless mode is off, the lower breezeless mode is on and running for a second preset duration; then the lower breezeless mode is off, the upper breezeless mode is on and running for another first preset duration, LOOP through the above steps until Ta is less than 25°C. For example, when Ts < Ta ≤ 27°C, the upper breezeless mode and the lower breezeless mode are alternately on and off. First, the upper breezeless mode is on and running for a duration t1=120s; and the upper breezeless mode is off, the lower breezeless mode is on and running for a duration t2=60s; then the lower breezeless mode is off, the upper breezeless mode is on, LOOP through the above steps until Ta < Ts, referring to the specific action rules corresponding to that the upper breezeless mode is on and the lower breezeless mode is on; and when Ta < Ts, the upper and lower breezeless modes are both on, namely the upper and lower vertical air guiding strips are both closed, referring to the specific action rule corresponding to that the upper and lower breezeless modes are both on.

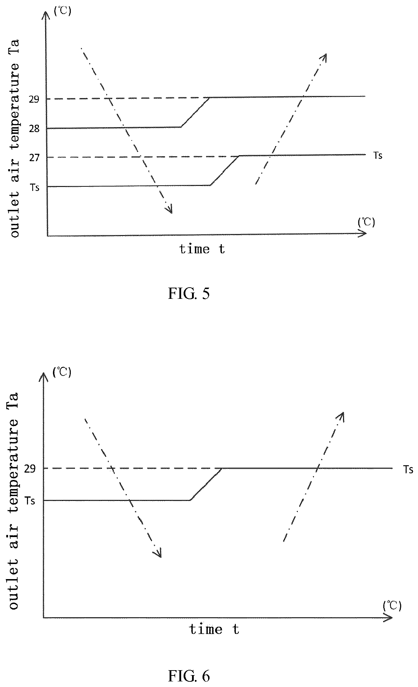

3) 27°C ≤ Ts < 29°C, as shown in FIG. 5:

when Ta > 29°C, the upper and lower breezeless modes are both off, namely the upper and lower vertical air guiding strips are both open, and the fan speed is set to be under automatic control; when Ts < Ta ≤ 29°C, the upper breezeless mode and the lower breezeless mode are alternately turned on and off, namely the upper vertical air guiding strip and the lower vertical air guiding strip are alternately open and closed. Specifically, the upper breezeless mode is on and running for a first preset duration; and the upper breezeless mode is off, the lower breezeless mode is on and running for a second preset duration; then the lower breezeless mode is off, the upper breezeless mode is on and running for another first preset duration, LOOP through the above steps until Ta < Ts. For example, when Ts < Ta ≤ 29°C, the upper breezeless mode and the lower breezeless mode are alternately on and off. First, the upper breezeless mode is on and running for a duration t1=120s; and the upper breezeless mode is off, the lower breezeless mode is on and running for a duration t2=60s; then the lower breezeless mode is off, the upper breezeless mode is on, LOOP through the above steps until Ta < Ts, referring to the specific action rules corresponding to that the upper breezeless mode is on and the lower breezeless mode is on; and when Ta < Ts, the upper and lower breezeless modes are both on, namely the upper and lower vertical air guiding strips are both closed, referring to the specific action rule corresponding to that the upper and lower breezeless modes are both on.

4) when Ts ≥ 29°C, the upper and lower breezeless modes are both off, namely the upper and lower vertical air guiding strips are both open, and the fan speed is set to be under automatic control, as shown in FIG. 6.

b) The corresponding control action for the automatic breezeless mode is determined according to the set temperature Ts of the air conditioner and the outlet temperature Ta of the air outlet, when the current indoor temperature change trend is the downward trend.

1) Ts < 24°C, as shown in FIG. 3:

when Ta > 28°C, the upper and lower breezeless modes are both off, namely the upper and lower vertical air guiding strips are both open, and the fan speed is set to be under automatic control; when 26°C < Ta ≤ 28°C, the lower breezeless mode is on and the upper breezeless mode is off, namely the upper vertical air guiding strip is open and the lower vertical air guiding strip is closed, referring to the specific action rule corresponding to that the lower breezeless mode in on; when 24°C < Ta ≤ 26°C, the upper breezeless mode and the lower breezeless mode are alternately turned on and off, namely the upper vertical air guiding strip and the lower vertical air guiding strip are alternately open and closed. Specifically, the upper breezeless mode is on and running for a first preset duration; and the upper breezeless mode is off, the lower breezeless mode is on and running for a second preset duration; then the lower breezeless mode is off, the upper breezeless mode is on and running for another first preset duration, LOOP through the above steps until Ta < 24°C. For example, when 24 < Ta ≤ 26°C, the upper breezeless mode and the lower breezeless mode are alternately on and off. First, the upper breezeless mode is on and running for a duration t1=120s; and the upper breezeless mode is off, the lower breezeless mode is on and running for a duration t2=60s; then the lower breezeless mode is off, the upper breezeless mode is on, LOOP through the above steps until Ta is less than 24°C, referring to the specific action rules corresponding to that the upper breezeless mode is on and the lower breezeless mode is on; and

when Ta is less than 24°C, the upper and lower breezeless modes are both on, referring to the specific action rule corresponding to that the upper and lower breezeless modes are both on.

2) when Ts is than 24°C, as shown in FIG. 4:

when Ta is more than 28°C, the upper breezeless mode and the lower breezeless mode are both off, namely the upper vertical air guiding strip and the lower vertical air guiding strip are both open, and the fan speed is set to be under automatic control;

when 26°C < Ta ≤ 28°C, the lower breezeless mode is on and the upper breezeless mode is off, namely the upper vertical air guiding strip is open and the lower vertical air guiding strip is closed, referring to the specific action rule corresponding to that the lower breezeless mode in on;

when Ts < Ta ≤ 26°C, the upper breezeless mode and the lower breezeless mode are alternately turned on and off, namely the upper vertical air guiding strip and the lower vertical air guiding strip are alternately open and closed. Specifically, the upper breezeless mode is on and running for a first preset duration; and the upper breezeless mode is off, the lower breezeless mode is on and running for a second preset duration; then the lower breezeless mode is off, the upper breezeless mode is on and running for another first preset duration, LOOP through the above steps until Ta is less than Ts. For example, when Ts < Ta ≤ 26°C, the upper breezeless mode and the lower breezeless mode are alternately on and off. First, the upper breezeless mode is on and running for a duration t1=120s; and the upper breezeless mode is off, the lower breezeless mode is on and running for a duration t2=60s; then the lower breezeless mode is off, the upper breezeless mode is on, LOOP through the above steps until Ta is less than Ts, referring to the specific action rules corresponding to that the upper breezeless mode is on and the lower breezeless mode is on; and

when Ta is less than Ts, the upper and lower breezeless modes are both on, referring to the specific action rule corresponding to that the upper and lower breezeless modes are both on.

3) 26°C ≤ Ts < 28°C, as shown in FIG. 5:

when Ta is more than 28°C, the upper breezeless mode and the lower breezeless mode are both off, namely the upper vertical air guiding strip and the lower vertical air guiding strip are both open, and the fan speed is set to be under automatic control;

when Ts < Ta ≤ 28°C, the upper breezeless mode and the lower breezeless mode are alternately turned on and off, namely the upper vertical air guiding strip and the lower vertical air guiding strip are alternately open and closed. Specifically, the upper breezeless mode is on and running for a first preset duration; and the upper breezeless mode is off, the lower breezeless mode is on and running for a second preset duration; then the lower breezeless mode is off, the upper breezeless mode is on and running for another first preset duration, LOOP through the above steps until Ta < Ts. For example, when Ts < Ta ≤ 28°C, the upper breezeless mode and the lower breezeless mode are alternately on and off. First, the upper breezeless mode is on and running for a duration t1=120s; and the upper breezeless mode is off, the lower breezeless mode is on and running for a duration t2=60s; then the lower breezeless mode is off, the upper breezeless mode is on, LOOP through the above steps until Ta < Ts, referring to the specific action rules corresponding to that the upper breezeless mode is on and the lower breezeless mode is on;

when Ta is less than Ts, the upper and lower breezeless modes are both on, referring to the specific action rule corresponding to that the upper and lower breezeless modes are both on.

4) Ts ≥ 28°C, as shown in FIG. 6, the upper breezeless mode and the lower breezeless mode are both off, namely the upper vertical air guiding strip and the lower vertical air guiding strip are both open, and the fan speed is set to be under automatic control.

In an embodiment, after the step S30, the method further includes:
exiting the automatic breezeless mode, in response to receiving a command of turning off the automatic breezeless mode or a command of switching to another mode.
The air conditioner exits the automatic breezeless mode, in response to receiving the command of turning off the breezeless mode sent by a remote controller or an application. Alternatively, the air conditioner exits the automatic breezeless mode, in response to receiving the command of switching to another mode, such as heating mode, dehumidification mode, air supply mode, and automatic mode. That is to say, as long as either one of the two conditions of receiving the breezeless mode off command or switching to another mode command is satisfied, the air conditioner can exit the automatic breezeless mode. In response to the air conditioner exiting the breezeless mode, corresponding air guide members return to original state, and the limits to the compressor frequency and the fan speed are removed.

In the present disclosure, when the air conditioner enters the automatic breezeless mode, the first indoor operating parameter and the second indoor operating parameter are obtained according to the preset frequency, the outlet air temperature is obtained based on the first indoor operating parameter and the second indoor operating parameter, and the current temperature change trend is determined based on the first indoor operating parameter. The set temperature of the air conditioner is obtained, and then corresponding control action for the automatic breezeless mode is performed based on the relationship among the set temperature, the temperature change trend, and the outlet air temperature. In accordance with the present disclosure, the corresponding control action for the automatic breezeless mode can be performed based on the relationship among the set temperature, the temperature change trend, and the outlet air temperature, after the air conditioner entering the automatic breezeless mode, where the control action for the automatic breezeless mode mainly includes adjusting opening and closing of the upper and lower vertical air guiding strips, controlling the frequency of the compressor and the speed of the indoor fan, so as to allow the outlet air blown from the indoor unit more comfortable and intelligent, thereby improving user experience.

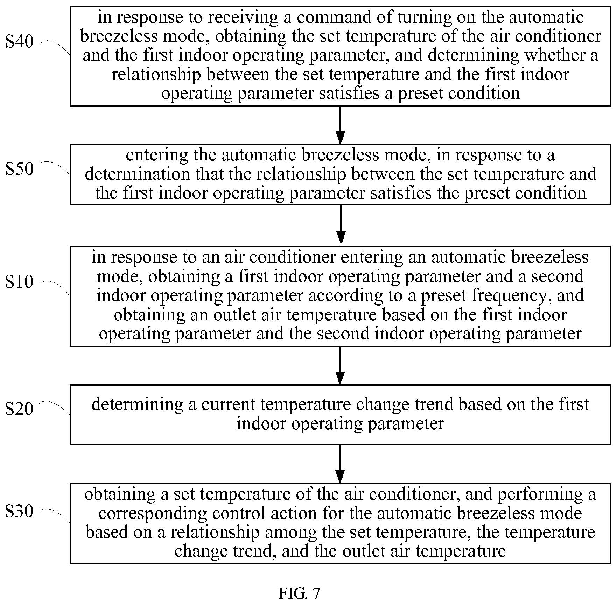

Based on the first embodiment, the present disclosure provides a second embodiment of the method, referring to FIG. 7, wherein the step S10 includes:
Step S40, in response to receiving a command of turning on the automatic breezeless mode, obtaining the set temperature of the air conditioner and the first indoor operating parameter, and determining whether a relationship between the set temperature of the air conditioner and the first indoor operating parameter satisfies a preset condition.

The command of turning on the automatic breezeless mode may be sent via a remote controller or a related application. In response to receiving the on command of the breezeless mode, the set temperature Ts and the first indoor operating parameter T1, namely the indoor ambient temperature, are obtained.

When the air conditioner enters the automatic breezeless mode, the horizontal air guiding strip and the breezeless mode control action are combined together to realize the adjustment of the motion state of the horizontal air guiding strip and the motion state of the vertical air guiding strip, the compressor frequency and the fan speed, to ensure more comfortable windless sensation. The specific combination may be as follows.

Three equal solutions are included in this step. In the first solution, the air guiding strip is adjusted upward to a certain angle and for a first preset duration, then the corresponding control action for the automatic breezeless mode is performed based on the relationship among the set temperature, the temperature change trend and the outlet air temperature. In the second solution, the breezeless mode is on during a second preset duration, namely the corresponding control action for the automatic breezeless mode is performed based on the relationship among the set temperature, the temperature change trend and the outlet air temperature, then the air guiding strip is adjusted upward to a certain angle. In the third solution, the corresponding control action for the automatic breezeless mode and the operation of adjusting the air guiding strip upward to a third preset angle are alternately performed according to a second preset rule. The second preset rule in the third solution mainly includes the following sequence of actions: 1) the upper breezeless mode is on, the lower breezeless mode in on, and the air guiding strip is adjusted up to an angle; 2) the upper breezeless mode is on, the air guiding strip is adjusted up to an angle, and the lower breezeless mode is on; 3) the lower breezeless mode is on, the upper breezeless mode is on, and the air guiding strip is adjusted up to an angle; 4) the lower breezeless mode is on, the air guiding strip is adjusted up to an angle, and the upper breezeless mode is on; 5) the air guiding strip is adjusted up to an angle, the lower breezeless mode is on, and the upper breezeless mode is on; and, 6) the air guiding strip is adjusted up to an angle, the upper breezeless mode is on, and the lower breezeless mode is on.

After obtaining the first indoor operating parameter, the currently obtained first indoor operating parameter is compared with the previously obtained first indoor operating parameter. If the currently obtained first indoor operating parameter is larger than the previously obtained first indoor operating parameter, the current indoor temperature trend is determined to be the upward trend; and if the currently obtained first indoor operating parameter is smaller than the previously obtained first indoor operating parameter, the current indoor temperature trend is determined to be the downward trend. The set temperature of the air conditioner refers to a target indoor temperature set by users via a remote controller or other means to the air conditioner. The set temperature of the air conditioner reflects user's wishes and represents the target temperature of the air conditioner. The breezeless mode refers to that as the indoor temperature has dropped, reaching or approaching the set temperature, the fan speed and the compressor frequency are controlled to decrease, so as to maintain the current indoor temperature and minimize user's feeling of cold wind. The control action for the automatic breezeless mode in response to the on state of the breezeless mode is mainly to perform cooling function from three aspects of the vertical air guiding strip, the compressor and the fan. When the air conditioner enters the automatic breezeless mode, the vertical air guiding strip is closed, and wind is blown from mini holes in the closed air guiding strip, thereby realizing a breezeless effect. The breezeless mode includes an upper breezeless mode and a lower breezeless mode. When the upper breezeless mode is on, the upper vertical air guiding strip is closed, the compressor frequency is limited to 35 Hz, and the fan speed is controlled to be no more than 35% in case of automatic wind. When the lower breezeless mode is on, the lower vertical air guiding strip is closed, the compressor frequency is limited to 40 Hz, and the fan speed is controlled to be no more than 45% in case of automatic wind. When the upper and lower breezeless modes are both on, the upper and lower vertical air guiding strips are both closed, the compressor frequency is limited to the minimum frequency, and the fan speed is controlled to be no more than 35% in case of automatic wind. The upper area of the air conditioner is relatively high, and the air supply distance is relatively far, thus the cooling effect in the upper breezeless mode is better than that in the lower breezeless mode. The frequency and the fan speed in the upper breezeless mode can be set lower than the frequency and the fan speed in the lower breezeless mode, realizing the same cooling effect. In this embodiment, the indoor unit has three sections of air guiding plates, including upper, middle, and lower air guiding plates, wherein the upper vertical air guiding strip corresponds to the upper air guiding plate, the lower vertical air guiding strip corresponds to the middle air guiding plate and the lower air guiding plate.

The control action corresponding to the on state of the upper breezeless mode includes that the upper vertical air guiding strip is closed, the compressor frequency and the fan speed are limited below a certain level, which may be set by technicians. For example, the compressor frequency is limited to 35Hz, and the fan speed is controlled to be no more than 35% in case of automatic wind. The control action corresponding to the on state of the lower breezeless mode includes that the lower vertical air guiding strip is closed, the compressor frequency and the fan speed are limited below a certain level, which may be set by technicians. For example, the compressor frequency is limited to 40Hz, and the fan speed is controlled to be no more than 45% in case of automatic wind. The control action corresponding to the on state of both the upper and lower breezeless modes includes that the upper vertical air guiding strip and the lower vertical air guiding strip are both closed, the compressor frequency and the fan speed are limited below a certain level, which may be set by technicians. For example, the compressor frequency is limited to the minimum frequency, and the fan speed is controlled to be no more than 35% in case of automatic wind.

When the relationship between the set temperature and the first indoor operating parameter does not satisfy the preset condition, the air conditioner maintains the current mode. In response to receiving the on command of the breezeless mode, the set temperature and the first indoor operating parameter (namely the indoor ambient temperature) are obtained, if the relationship between the two satisfies a certain condition, the air conditioner is made to enter the automatic breezeless mode; and if the relationship does not satisfy the certain condition, the air conditioner maintains the current mode, such as the heating mode, dehumidification mode, air supply mode, and automatic mode. Only on condition that the air conditioner receives the on command of the breezeless mode and that the relationship satisfies the preset condition, the air conditioner enters the automatic breezeless mode.

In the above three solutions, the corresponding control action for the automatic breezeless modes are all performed based on the relationship among the set temperature of the air conditioner, the temperature change trend, and the outlet air temperature. During the operations of the control action for the automatic breezeless modes in the above three solutions, the horizontal air guiding strips also swings up and down to increase the uniformity of the air temperature, which reduces the temperature difference in the vertical direction, thereby softening the wind feeling. The specific motion rule of the horizontal air guiding strip during the operation of the breezeless mode control action can be set by technicians, including but not limited to the moving period and the moving angle of the horizontal air guiding strip.

The air conditioner exits the automatic breezeless mode, in response to receiving the command of turning off the breezeless mode sent via a remote controller or an application. Alternatively, the air conditioner exits the automatic breezeless mode, in response to receiving the command of switching to another mode, such as heating mode, dehumidification mode, air supply mode, and automatic mode. That is to say, as long as either one of the two conditions of receiving the breezeless mode off command or switching to another mode command is satisfied, the air conditioner can exit the automatic breezeless mode. In response to the air conditioner exiting the breezeless mode, corresponding air guiding strips return to original state, and the limits to the compressor frequency and the fan speed are removed.

Step S50, entering the automatic breezeless mode, in response to a determination that the relationship between the set temperature and the first indoor operating parameter satisfies the preset condition.

If the relationship between the set temperature Ts and the first indoor operating parameter T1 satisfies the preset condition, the air conditioner is made to enter the automatic breezeless mode. In this embodiment, the relationship between the set temperature Ts and the first indoor operating parameter T1 needs to satisfy T1-Ts < X °C, where the specific value of X can be determined by technicians according to actual need of a certain region. For example, after users sending the on command of the automatic breezeless mode via a remote controller or a certain APP, the present set temperature Ts of the air conditioner and the present first indoor operating parameter T1 are obtained, and then whether the relationship between the set temperature Ts and the first indoor operating parameter T1 satisfies the condition T1-Ts < 2°C is determined. This condition ensures a difference between the current indoor temperature and the target temperature being less than a certain value, which realizes comfort after completing the cooling. If this condition is satisfied, the air conditioner enters the automatic breezeless mode; and if the condition is not satisfied, the air conditioner maintains the current mode, such as the heating mode, the dehumidification mode, the air supply mode, and the automatic mode. The air conditioner enters the automatic breezeless mode only on condition that the air conditioner receives the on command of the breezeless mode and that T1-Ts < 2°C.

In an embodiment, after step S40, the method further includes:

maintaining a current mode, in response to a determination that the relationship between the set temperature and the first indoor operating parameter fails to satisfy the preset condition.

The set temperature of the air conditioner Ts and the first indoor operating parameter T1 (namely the indoor ambient temperature) are obtained, after receiving the command of turning on the breezeless mode. If the relationship between the set temperature Ts and the first indoor operating parameter T1 satisfies the preset condition, the air conditioner is made to enter the automatic breezeless mode; and if the relationship between the set temperature Ts and the first indoor operating parameter T1 does not satisfy the preset condition, the air conditioner maintains the current mode. The air conditioner may have various modes including the heating mode, the dehumidification mode, the air supply mode, and the automatic mode. The air conditioner enters the automatic breezeless mode only on condition that the air conditioner receives the command of turning on the breezeless mode and that T1-Ts < 2°C.

In the embodiment of the method for controlling automatic breezeless mode, after receiving the on command of the breezeless mode, the set temperature of the air conditioner and the first indoor operating parameter are obtained according to the preset frequency, and whether the relationship between the set temperature of the air conditioner and the first indoor operating parameter satisfies the preset condition is determined. The air conditioner enters the automatic breezeless mode, when the relationship between the set temperature and the first indoor operating parameter satisfies the preset condition. Only when the on command of the breezeless mode is received and when the on condition of the breezeless mode is satisfied, that is, T1-Ts < X °C, the automatic breezeless mode of the air conditioner can be turned on. This embodiment combines fast cooling with increased user comfort. As the wind speed is small when the breezeless mode is on, cool air can only be blown out from mini holes in the air guiding strips, a humanized feature of air conditioner which frees people from strong wind draft.

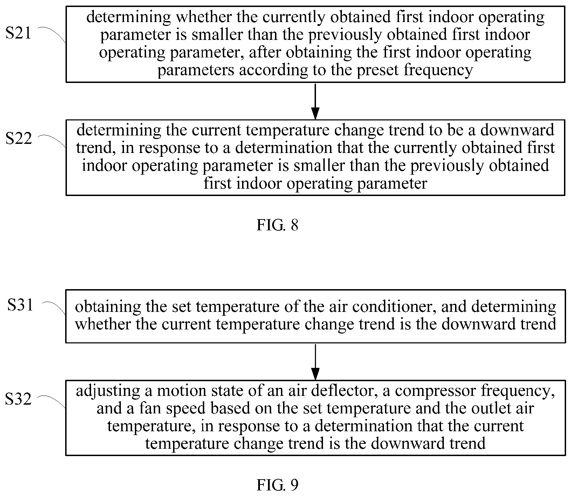

Based on the first embodiment, the present disclosure provides a third embodiment of the method, referring to FIG. 8, wherein the step S20 includes:

Step S21, determining whether the currently obtained first indoor operating parameter is smaller than the previously obtained first indoor operating parameter, after obtaining the first indoor operating parameter according to the preset frequency.

The preset frequency may be set by technicians, according to which the first indoor operating parameter and the second indoor operating parameter are obtained multiple times at regular intervals. For example, it may be set to obtain the indoor ambient temperature T1 by a temperature sensor arranged on the indoor unit every 1 minute or 0.5 minutes, and then compare the currently obtained temperature T1 with the previously obtained temperature T1.

Step S22, determining the current temperature change trend to be a downward trend, in response to a determination that the currently obtained first indoor operating parameter is smaller than the previously obtained first indoor operating parameter.

If the currently obtained temperature T1 is smaller than the previously obtained temperature T1, it may be indicated that the indoor ambient temperature decreases after a certain time interval, from the previously obtained temperature T1 to the currently obtained temperature T1. Thus, the decreasing of the temperature indicates the downward trend, and the current temperature change trend can be determined to be the downward trend.

In an embodiment, after the step S21, the method further includes:

determining the current temperature change trend to be an upward trend, in response to a determination that the currently obtained first indoor operating parameter is larger than the previously obtained first indoor operating parameter.

If the currently obtained temperature T1 is larger than the previously obtained temperature T1, it may be indicated that the indoor ambient temperature increases after a certain time interval, from the previously obtained temperature T1 to the currently obtained temperature T1. Thus, the increasing of the temperature indicates an upward trend, and the current temperature change trend can be determined to be the upward trend.

In the embodiment of the method for controlling automatic breezeless mode, the determination that whether the currently obtained first indoor operating parameter is smaller than the previously obtained first indoor operating parameter is performed after obtaining the first indoor operating parameters, and the current temperature change trend is then determined to be the download trend in response to a determination that the currently obtained first indoor operating parameter is smaller than the previously obtained first indoor operating parameter. The temperature change trend can be obtained by a simple numerical comparison, and provides a determining basis for the subsequent adjustment of the breezeless mode.

Based on the first embodiment, the present disclosure provides a fourth embodiment of the method, referring to FIG. 9, wherein the step S30 includes:

Step S31, obtaining the set temperature of the air conditioner, determining whether the current temperature change trend is the downward trend.

In the step mentioned above, if the currently obtained temperature T1 is smaller than the previously obtained temperature T1, it is indicated that the indoor ambient temperature decreases after a certain time interval, from the previously obtained temperature T1 to the currently obtained temperature T1. The decreasing of the temperature indicates the downward trend. By this, the current temperature change trend can be determined to be the downward trend.

Step S32, adjusting a motion state of an air guiding strip, a compressor frequency, and a fan speed based on the set temperature and the outlet air temperature, in response to a determination that the current temperature change trend is the downward trend.

Based on the relationship between the set temperature of the air conditioner and the outlet air temperature, the breezeless mode of the air conditioner in the temperature downward trend can be automatically controlled according to a corresponding rule, after the current temperature change trend is determined to be the downward trend.

1) Ts < 24°C:

when Ta > 28°C, the upper and lower breezeless modes are both off, namely the upper and lower vertical air guiding strips are both open, and the fan speed is set to be under automatic control; when 26°C < Ta ≤ 28°C, the lower breezeless mode is on and the upper breezeless mode is off, namely the upper vertical air guiding strip is open and the lower vertical air guiding strip is closed; when 24°C < Ta ≤ 26°C, the upper breezeless mode and the lower breezeless mode are alternately turned on and off, namely the upper vertical air guiding strip and the lower vertical air guiding strip are alternately open and closed. Specifically, the upper breezeless mode is on and running for a first preset duration; and the upper breezeless mode is off, the lower breezeless mode is on and running for a second preset duration; then the lower breezeless mode is off, the upper breezeless mode is on and running for another first preset duration, LOOP through the above steps until Ta < 24°C. For example, when 24 < Ta ≤ 26°C, the upper breezeless mode and the lower breezeless mode are alternately turned on and off. First, the upper breezeless mode is on and running for a duration t1=120s; and the upper breezeless mode is off, the lower breezeless mode is on and running for a duration t2=60s; then the lower breezeless mode is off, the upper breezeless mode is on, LOOP through the above steps until Ta < 24°C; and

when Ta < 24°C, the upper and lower breezeless modes are both on, namely the upper vertical air guiding strip and the lower vertical air guiding strip are both closed.

2) 24°C ≤ Ts < 26°C:

when Ta > 28°C, the upper breezeless mode and the lower breezeless mode are both off, namely the upper vertical air guiding strip and the lower vertical air guiding strip are both open, and the fan speed is set to be under automatic control; when 26°C < Ta ≤ 28°C, the lower breezeless mode is on and the upper breezeless mode is off, namely the upper vertical air guiding strip is open and the lower vertical air guiding strip is closed; when Ts < Ta ≤ 26°C, the upper breezeless mode and the lower breezeless mode are alternately turned on and off, namely the upper vertical air guiding strip and the lower vertical air guiding strip are alternately open and closed. Specifically, the upper breezeless mode is on and running for a first preset duration; and the upper breezeless mode is off, the lower breezeless mode is on and running for a second preset duration; then the lower breezeless mode is off, the upper breezeless mode is on and running for another first preset duration, LOOP through the above steps until Ta < Ts. For example, when Ts < Ta ≤ 26°C, the upper breezeless mode and the lower breezeless mode are alternately on and off. First, the upper breezeless mode is on and running for a duration t1=120s; and the upper breezeless mode is off, the lower breezeless mode is on and running for a duration t2=60s; then the lower breezeless mode is off, the upper breezeless mode is on, LOOP through the above steps until Ta < Ts; and

when Ta < Ts, the upper and lower breezeless modes are both on, namely the upper vertical air guiding strip and the lower vertical air guiding strip are both closed.

3) when 26°C ≤ Ts < 28°C:

when Ta > 28°C, the upper breezeless mode and the lower breezeless mode are both off, namely the upper vertical air guiding strip and the lower vertical air guiding strip are both open, and the fan speed is set to be under automatic control;

when Ts < Ta ≤ 28°C, the upper breezeless mode and the lower breezeless mode are alternately turned on and off, namely the upper vertical air guiding strip and the lower vertical air guiding strip are alternately open and closed. Specifically, the upper breezeless mode is on and running for a first preset duration; and the upper breezeless mode is off, the lower breezeless mode is on and running for a second preset duration; then the lower breezeless mode is off, the upper breezeless mode is on and running for another first preset duration, LOOP through the above steps until Ta < Ts. For example, when Ts < Ta ≤ 28°C, the upper breezeless mode and the lower breezeless mode are alternately on and off. First, the upper breezeless mode is on and running for a duration t1=120s; and the upper breezeless mode is off, the lower breezeless mode is on and running for a duration t2=60s; then the lower breezeless mode is off, the upper breezeless mode is on, LOOP through the above steps until Ta < Ts;

when Ta < Ts, the upper and lower breezeless modes are both on, namely the upper vertical air guiding strip and the lower vertical air guiding strip are both closed.

4) Ts ≥ 28°C, the upper breezeless mode and the lower breezeless mode are both off, namely the upper vertical air guiding strip and the lower vertical air guiding strip are both open, and the fan speed is set to be under automatic control.

In an embodiment, after the step S31, the method further includes:
adjusting the motion state of the air guiding strip, the compressor frequency, and the fan speed based on the set temperature and the outlet air temperature, in response to a determination that the current temperature change trend is the upward trend.

1) Ts < 25°C:

when Ta > 29°C, the upper and lower breezeless modes are both off, namely the upper and lower vertical air guiding strips are both open, the fan speed is set to be under automatic control;

when 27°C < Ta ≤ 29°C, the lower breezeless mode is on and the upper breezeless mode is on, namely the upper vertical air guiding strip is open while the lower vertical air guiding strip is off;

when 25°C < Ta ≤ 27°C, the upper breezeless mode and the lower breezeless mode are alternately turned on and off, namely the upper vertical air guiding strip and the lower vertical air guiding strip are alternately open and closed. Specifically, the upper breezeless mode is on and running for a first preset duration; the upper breezeless mode is off, the lower breezeless mode is on and running for a second preset duration; then the lower breezeless mode is off, the upper breezeless mode is on and running for another first preset duration, LOOP through the above steps until Ta < 25°C. For example, when 25°C < Ta ≤ 27°C, the upper breezeless mode and the lower breezeless mode are alternately on and off. First, the upper breezeless mode is on and running for a duration t1=120s; and the upper breezeless mode is off, the lower breezeless mode is on and running for a duration t2=60s; then the lower breezeless mode is off, the upper breezeless mode is on, LOOP through the above steps until Ta < 25°C; and

when Ta < 25°C, the upper and lower breezeless modes are both on, namely the upper and lower vertical air guiding strips are both closed.

2) 25°C ≤ Ts < 27°C:

when Ta > 29°C, the upper and lower breezeless modes are both off, namely the upper and lower vertical air guiding strips are both open, and the fan speed is set to be under automatic control;

when 27°C < Ta ≤ 29°C, the lower breezeless mode is on and the upper breezeless mode is off, namely the upper vertical air guiding strip is open and the lower vertical air guiding strip is closed;

when Ts < Ta ≤ 27°C, the upper breezeless mode and the lower breezeless mode are alternately turned on and off, namely the upper vertical air guiding strip and the lower vertical air guiding strip are alternately open and closed. Specifically, the upper breezeless mode is on and running for a first preset duration; and the upper breezeless mode is off, the lower breezeless mode is on and running for a second preset duration; then the lower breezeless mode is off, the upper breezeless mode is on and running for another first preset duration, LOOP through the above steps until Ta < Ts. For example, when Ts < Ta ≤ 27°C, the upper breezeless mode and the lower breezeless mode are alternately on and off. First, the upper breezeless mode is on and running for a duration t1=120s; and the upper breezeless mode is off, the lower breezeless mode is on and running for a duration t2=60s; then the lower breezeless mode is off, the upper breezeless mode is on, LOOP through the above steps until Ta < Ts, referring to the specific action rules corresponding to that the upper breezeless mode is on and the lower breezeless mode is on; and

when Ta < Ts, the upper and lower breezeless modes are both on, namely the upper and lower vertical air guiding strips are both closed.

3) 27°C ≤ Ts < 29°C:

when Ta > 29°C, the upper and lower breezeless modes are both off, namely the upper and lower vertical air guiding strips are both open, and the fan speed is set to be under automatic control; when Ts < Ta ≤ 29°C, the upper breezeless mode and the lower breezeless mode are alternately turned on and off, namely the upper vertical air guiding strip and the lower vertical air guiding strip are alternately open and closed. Specifically, the upper breezeless mode is on and running for a first preset duration; and the upper breezeless mode is off, the lower breezeless mode is on and running for a second preset duration; then the lower breezeless mode is off, the upper breezeless mode is on and running for another first preset duration, LOOP through the above steps until Ta < Ts. For example, when Ts < Ta ≤ 29°C, the upper breezeless mode and the lower breezeless mode are alternately on and off. First, the upper breezeless mode is on and running for a duration t1=120s; and the upper breezeless mode is off, the lower breezeless mode is on and running for a duration t2=60s; then the lower breezeless mode is off, the upper breezeless mode is on, LOOP through the above steps until Ta < Ts; and when Ta < Ts, the upper and lower breezeless modes are both on, namely the upper and lower vertical air guiding strips are both closed.

4) when Ts ≥ 29°C, the upper and lower breezeless modes are both off, namely the upper and lower vertical air guiding strips are both open, and the fan speed is set to be under automatic control.

In the embodiment of the method for controlling automatic breezeless mode, by obtaining the set temperature of the air conditioner, whether the current temperature change trend is the downward trend is determined. If the current temperature change is in the downward trend, the motion state of the air guiding strip, the compressor frequency, and the fan speed are adjusted based on the set temperature and the outlet air temperature. When the air conditioner enters the breezeless mode, the breezeless mode is automatically controlled according to the temperature Ts, the temperature Ta, and the change trend of the temperature Ta, which can reduce the indoor temperature to the set temperature in the shortest possible period of time and soften cool air into comfortable streams, thereby providing users with desired sensation of cooling experience. In particular, when the indoor temperature is comfortable or a litter colder, the air conditioner in accordance with the embodiment can ensure more pleasant airflow

The present disclosure further provides a computer-readable storage medium.

The computer-readable storage medium stores an automatic breezeless mode control program, where the automatic breezeless mode control program when being executed by a processor performs the following steps:

in response to an air conditioner entering an automatic breezeless mode, obtaining a first indoor operating parameter and a second indoor operating parameter according to a preset frequency, and obtaining an outlet air temperature based on the first indoor operating parameter and the second indoor operating parameter;
determining a current temperature change trend based on the first indoor operating parameter; and obtaining a set temperature of the air conditioner, and performing a corresponding control action for the automatic breezeless mode based on a relationship among the set temperature, the temperature change trend, and the outlet air temperature.

Optionally, the automatic breezeless mode control program when being executed by a processor further performs the following steps:

in response to receiving a command of turning on the automatic breezeless mode, obtaining the set temperature of the air conditioner and the first indoor operating parameter, and determining whether a relationship between the set temperature and the first indoor operating parameter satisfies a preset condition; and
entering the automatic breezeless mode, in response to a determination that the relationship between the set temperature and the first indoor operating parameter satisfies the preset condition.

Optionally, the automatic breezeless mode control program when being executed by a processor further performs the following steps:

determining whether the currently obtained first indoor operating parameter is smaller than the previously obtained first indoor operating parameter, after obtaining the first indoor operating parameters according to the preset frequency;
determining the current temperature change trend to be a downward trend, in response to a determination that the currently obtained first indoor operating parameter is smaller than the previously obtained first indoor operating parameter.

Optionally, the automatic breezeless mode control program when being executed by a processor further performs the following steps:

determining the current temperature change trend to be an upward trend, in response to a determination that the currently obtained first indoor operating parameter is larger than the previously obtained first indoor operating parameter.

Optionally, the automatic breezeless mode control program when being executed by a processor further performs the following steps:

obtaining the set temperature of the air conditioner, and determining whether the current temperature change trend is the downward trend; and

adjusting a motion state of an air guiding strip, a compressor frequency, and a fan speed based on the set temperature and the outlet air temperature, in response to a determination that the current temperature change trend is the downward trend.

Optionally, the automatic breezeless mode control program when being executed by a processor further performs the following steps:

in response to the air conditioner entering the automatic breezeless mode, adjusting an horizontal air guiding strip upward to a preset angle during a first preset duration; and

obtaining the set temperature of the air conditioner, the temperature change trend, and the outlet air temperature according to the preset frequency at the end of the first preset duration, and performing the corresponding control action for the automatic breezeless mode based on the relationship among the set temperature, the temperature change trend, and the outlet air temperature.

Optionally, the automatic breezeless mode control program when being executed by a processor further performs the following steps:

in response to the air conditioner entering the automatic breezeless mode, obtaining the set temperature of the air conditioner, the temperature change trend, and the outlet air temperature according to the preset frequency, and performing the corresponding control action for the automatic breezeless mode based on the relationship among the set temperature, the temperature change trend, and the outlet air temperature during a second preset duration; and

adjusting an horizontal air guiding strip upward to a second preset angle at the end of the second preset duration.

Optionally, the automatic breezeless mode control program when being executed by a processor further performs the following steps:

in response to the air conditioner entering the automatic breezeless mode, obtaining the set temperature of the air conditioner, the temperature change trend, and the outlet air temperature according to the preset frequency; and

alternately performing, according to a preset rule, the corresponding control action for the automatic breezeless mode based on the relationship among the set temperature, the temperature change trend, and the outlet air temperature, and an operation of adjusting the air guiding strip upward to a third preset angle.

It's to be clarified that the term "include", "comprise" or any other variants thereof is intended to encompass a non-exclusive inclusion, such that a process, method, device, or system including a series of elements not only includes those elements, but also includes other elements that are not explicitly listed, or elements that are inherent to such a process, method, device, or system. In the absence of more restrictions, an element defined by the phrase "including one ..." does not exclude the existence of additional identical elements in the process, method, device, or system that includes the element.

The numbers of the embodiments according to the present disclosure are merely for description, and do not represent for the advantages and disadvantages of the embodiments.

According to the description of the above-mentioned embodiments, the skilled in the art can clearly understand that the method of embodiments above may be implemented by means of software plus a necessary general hardware platform, of course, also by means of hardware, but in many cases the former is a better implementation. Based on the understanding, the technical solution of the present disclosure can be embodied in the form of a software product in essence or in part contributing to the prior art. The software product is stored in a storage medium (such as a ROM/RAM, a magnetic disk, an optical disk) as described above, including a plurality of instructions for causing a terminal device (which may be a mobile phone, a computer, a server, an air conditioner, or a network device, and so on.) to execute the method described in various embodiments according to the present disclosure.

**Claims**

1. A method for controlling an automatic breezeless mode, wherein breezeless mode refers to that an indoor temperature has dropped, reaching or approaching a set temperature of an air conditioner, a fan speed and a compressor frequency of the air conditioner are controlled to decrease, so as to maintain the current indoor temperature and minimize user's feeling of cold wind, **characterized in that**, the method comprises:

in response to the air conditioner entering the automatic breezeless mode, obtaining (S10) a first indoor operating parameter being a room temperature and a second indoor operating parameter being an evaporator coil temperature according to a preset frequency, and obtaining an outlet air temperature based on the first indoor operating parameter and the second indoor operating parameter;

determining (S20) a current temperature change trend based on the first indoor operating parameter; and

obtaining (S30) a set temperature of the air conditioner, and performing a corresponding control action for the automatic breezeless mode based on a relationship among the set temperature, the temperature change trend, and the outlet air temperature.

2.  The method of claim 1, **characterized in that**, before the operation (S10) of in response to the air conditioner entering the automatic breezeless mode, obtaining the first indoor operating parameter and the second indoor operating parameter according to a preset frequency, and obtaining the outlet air temperature based on the first indoor operating parameter and the second indoor operating parameter, the method further comprises:

in response to receiving a command of turning on the automatic breezeless mode, obtaining (S40) the set temperature of the air conditioner and the first indoor operating parameter, and determining whether a relationship between the set temperature and the first indoor operating parameter satisfies a preset condition; and

entering (S50) the automatic breezeless mode, in response to a determination that the relationship between the set temperature and the first indoor operating parameter satisfies the preset condition.

3.  The method of claim 2, **characterized in that**, after the operation (S40) of in response to receiving a command of turning on the automatic breezeless mode, obtaining the set temperature of the air conditioner and the first indoor operating parameter, and determining whether a relationship between the set temperature and the first indoor operating parameter satisfies a preset condition, the method further comprises:

maintaining a current mode, in response to a determination that the relationship between the set temperature and the first indoor operating parameter fails to satisfy the preset condition.

4.  The method of of claim 1, **characterized in that**, the operation (S20) of determining a current temperature change trend based on the first indoor operating parameter comprises:

determining (S21) whether a currently obtained first indoor operating parameter is smaller than a previously obtained first indoor operating parameter, after obtaining the first indoor operating parameters according to the preset frequency; determining (S22) the current temperature change trend to be a downward trend, in response to a determination that the currently obtained first indoor operating parameter is smaller than the previously obtained first indoor operating parameter.

5.  The method of claim 4, **characterized in that**, after the operation (S21) of determining whether the currently obtained first indoor operating parameter is smaller than the previously obtained first indoor operating parameter, after obtaining the first indoor operating parameters according to the preset frequency, the method further comprises:

determining the current temperature change trend to be an upward trend, in response to a determination that the currently obtained first indoor operating parameter is larger than the previously obtained first indoor operating parameter.

6.  The method of claim 1, **characterized in that**, the operation (S30) of obtaining a set temperature of the air conditioner, and performing a corresponding control action for the automatic breezeless mode based on a relationship among the set temperature, the temperature change trend, and the outlet air temperature comprises:

obtaining (S31) the set temperature of the air conditioner, and determining whether the current temperature change trend is a downward trend; and

adjusting (S32) a motion state of an air guiding strip, a compressor frequency, and a fan speed based on the set temperature and the outlet air temperature, in response to a determination that the current temperature change trend is the downward trend.

7.  The method of claim 6, **characterized in that**, after the operation (S31) of obtaining the set temperature of the air conditioner, and determining whether the current temperature change trend is a downward trend, the method further comprises:

adjusting the motion state of the air guiding strip, the compressor frequency, and the fan speed based on the set temperature and the outlet air temperature, in response to a determination that the current temperature change trend is an upward trend.

8. The method of claim 1, **characterized in that**, after the operation (S30) of obtaining a set temperature of the air conditioner, and performing a corresponding control action for the automatic breezeless mode based on a relationship among the set temperature, the temperature change trend, and the outlet air temperature, the method further comprises:

exiting the automatic breezeless mode, in response to receiving a command of turning off the automatic breezeless mode or a command of switching to another mode.

9. The method of claim 1, **characterized in that**, the method further comprises:

in response to the air conditioner entering the automatic breezeless mode, adjusting an horizontal air guiding strip upwards to a first preset angle within a first preset duration; and obtaining the set temperature of the air conditioner, the temperature change trend, and the outlet air temperature according to the preset frequency at the end of the first preset duration, and performing the corresponding control action for the automatic breezeless mode based on the relationship among the set temperature, the temperature change trend, and the outlet air temperature.

10. The method of claim 1, **characterized in that**, the method further comprises:

in response to the air conditioner entering the automatic breezeless mode, obtaining the set temperature of the air conditioner, the temperature change trend, and the outlet air temperature according to the preset frequency, and performing the corresponding control action for the automatic breezeless mode based on the relationship among the set temperature, the temperature change trend, and the outlet air temperature within a second preset duration; and adjusting an horizontal air guiding strip upwards to a second preset angle at the end of the second preset duration.

11. The method of of claim 1, **characterized in that**, the method further comprises:

in response to the air conditioner entering the automatic breezeless mode, obtaining the set temperature of the air conditioner, the temperature change trend, and the outlet air temperature according to the preset frequency; and alternately performing, according to a preset rule, the corresponding control action for the automatic breezeless mode and an operation of adjusting the air guiding strip upward to a third preset angle based on the relationship among the set temperature, the temperature change trend, and the outlet air temperature.

12. A device for controlling automatic breezeless mode, wherein breezeless mode refers to that an the indoor temperature has dropped, reaching or approaching a set temperature of an air conditioner, a fan speed and a compressor frequency of the air conditioner are controlled to decrease, so as to maintain the current indoor temperature and minimize user's feeling of cold wind, **characterized in that**, the device comprises a memory (1005), a processor (1001), and a program for controlling an automatic breezeless mode executable by the processor (1001) and stored in the memory (1005), the program when being executed by the processor (1001) performs the operations of the method according to any one of claims 1 to 11.

13. A computer-readable storage medium, **characterized in that**, the computer-readable storage medium stores a program for controlling an automatic breezeless mode, wherein breezeless mode refers to that an the indoor temperature has dropped, reaching or approaching a set temperature of an air conditioner, a fan speed and a compressor frequency of the air conditioner are controlled to decrease, so as to maintain the current indoor temperature and minimize user's feeling of cold wind, the program when being executed by a processor performs the steps of the method according to any one of claims 1 to 11.

**Patentansprüche**

1. Verfahren zum Steuern eines automatischen zugfreien Modus, wobei sich der zugfreie Modus darauf bezieht, dass eine Innentemperatur gesunken ist und eine eingestellte Temperatur einer Klimaanlage erreicht oder sich dieser nähert, eine Gebläsedrehzahl und eine Kompressorfrequenz der Klimaanlage so gesteuert werden, dass sie abnehmen, um die aktuelle Innentemperatur aufrechtzuerhalten und das Gefühl des Benutzers von kaltem Wind zu minimieren, **dadurch gekennzeichnet, dass** das Verfahren Folgendes umfasst:

als Reaktion darauf, dass die Klimaanlage in den automatischen zugfreien Modus eintritt, Erhalten (S10) eines ersten Innenraumbetriebsparameters, der eine Raumtemperatur ist, und eines zweiten Innenraumbetriebsparameters, der eine Verdampferspulentemperatur ist, gemäß einer voreingestellten Frequenz, und Erhalten einer Auslasslufttemperatur basierend auf dem ersten Innenraumbetriebsparameter und dem zweiten Innenraumbetriebsparameter;

Bestimmen (S20) eines aktuellen Temperaturänderungstrends basierend auf dem ersten Innenraumbetriebsparameter; und

Erhalten (S30) einer eingestellten Temperatur der Klimaanlage und Durchführen einer entsprechenden Steueraktion für den automatischen zugfreien Modus basierend auf einer Beziehung zwischen der eingestellten Temperatur, dem Temperaturänderungstrend und der Auslasslufttemperatur.

2. Verfahren gemäß Anspruch 1, **dadurch gekennzeichnet, dass** das Verfahren vor dem Vorgang (S10) des Erhaltens des ersten Innenraumbetriebsparameters und des zweiten Innenraumbetriebsparameters gemäß einer voreingestellten Frequenz als Reaktion auf das Eintreten der Klimaanlage in den automatischen zugfreien Modus und des Erhaltens der Auslasslufttemperatur basierend auf dem ersten Innenraumbetriebsparameter und dem zweiten Innenraumbetriebsparameter ferner Folgendes umfasst:

als Reaktion auf das Empfangen eines Befehls zum Einschalten des automatischen zugfreien Modus, Erhalten (S40) der eingestellten Temperatur der Klimaanlage und des ersten Innenraumbetriebsparameters, und Bestimmen, ob eine Beziehung zwischen der eingestellten Temperatur und dem ersten Innenraumbetriebsparameter eine voreingestellte Bedingung erfüllt; und

Eintreten (S50) in den automatischen zugfreien Modus als Reaktion auf eine Feststellung, dass die Beziehung zwischen der eingestellten Temperatur und dem ersten Innenraumbetriebsparameter die voreingestellte Bedingung erfüllt.

3. Verfahren gemäß Anspruch 2, **dadurch gekennzeichnet, dass** nach dem Vorgang (S40) des Erhaltens der eingestellten Temperatur der Klimaanlage und des ersten Innenraumbetriebsparameters als Reaktion auf das Empfangen eines Befehls zum Einschalten des automatischen zugfreien Modus und des Bestimmens, ob eine Beziehung zwischen der eingestellten Temperatur und dem ersten Innenraumbetriebsparameter eine voreingestellte Bedingung erfüllt, das Verfahren ferner Folgendes umfasst:

Aufrechterhalten eines aktuellen Modus als Reaktion auf eine Feststellung, dass die Beziehung zwischen der eingestellten Temperatur und dem ersten Innenraumbetriebsparameter die voreingestellte Bedingung nicht erfüllt.

4. Verfahren gemäß Anspruch 1, **dadurch gekennzeichnet, dass** der Vorgang (S20) des Bestimmens eines aktuellen Temperaturänderungstrends basierend auf dem ersten Innenraumbetriebsparameter Folgendes umfasst:

Bestimmen (S21), ob ein aktuell erhaltener erster Innenraumbetriebsparameter kleiner ist als ein zuvor erhaltener erster Innenraumbetriebsparameter, nach Erhalten der ersten Innenraumbetriebsparameter gemäß der voreingestellten Frequenz;

Bestimmen (S22), dass der aktuelle Temperaturänderungstrend ein Abwärtstrend ist, als Reaktion auf eine Feststellung, dass der aktuell erhaltene erste Innenraumbetriebsparameter kleiner ist als der zuvor erhaltene erste Innenraumbetriebsparameter.

5. Verfahren gemäß Anspruch 4, **dadurch gekennzeichnet, dass** nach dem Vorgang (S21) des Bestimmens, ob der aktuell erhaltene erste Innenraumbetriebsparameter kleiner ist als der zuvor erhaltene erste Innenraumbetriebsparameter, nach dem Erhalten der ersten Innenraumbetriebsparameter gemäß der voreingestellten Frequenz, das Verfahren ferner Folgendes umfasst:

Bestimmen, dass der aktuelle Temperaturänderungstrend ein Aufwärtstrend ist, als Reaktion auf eine Feststellung, dass der aktuell ermittelte erste Innenraumbetriebsparameter größer ist als der zuvor ermittelte erste Innenraumbetriebsparameter.

6. Verfahren gemäß Anspruch 1, **dadurch gekennzeichnet, dass** der Vorgang (S30) des Erhaltens einer eingestellten Temperatur der Klimaanlage und des Durchführens einer entsprechenden Steueraktion für den automatischen zugfreien Modus basierend auf einer Beziehung zwischen der eingestellten Temperatur, dem Temperaturänderungstrend und der Auslasslufttemperatur Folgendes umfasst:

Erhalten (S31) der eingestellten Temperatur der Klimaanlage und Bestimmen, ob der aktuelle Temperaturänderungstrend ein Abwärtstrend ist; und

Einstellen (S32) eines Bewegungszustands eines Luftführungsstreifens, einer Kompressorfrequenz und einer Gebläsedrehzahl basierend auf der eingestellten Temperatur und der Auslasslufttemperatur als Reaktion auf die Feststellung, dass der aktuelle Temperaturänderungstrend der Abwärtstrend ist.

7. Verfahren gemäß Anspruch 6, **dadurch gekennzeichnet, dass** nach dem Vorgang (S31) des Erhaltens der eingestellten Temperatur der Klimaanlage und des Bestimmens, ob der aktuelle Temperaturänderungstrend ein Abwärtstrend ist, das Verfahren ferner Folgendes umfasst:

Anpassen des Bewegungszustands des Luftleitstreifens, der Kompressorfrequenz und der Gebläsedrehzahl basierend auf der eingestellten Temperatur und der Auslasslufttemperatur als Reaktion auf eine Feststellung, dass der aktuelle Temperaturänderungstrend ein Aufwärtstrend ist.

8. Verfahren gemäß Anspruch 1, **dadurch gekennzeichnet, dass** nach dem Vorgang (S30) des Erhaltens einer eingestellten Temperatur der Klimaanlage und des Durchführens einer entsprechenden Steueraktion für den automatischen zugfreien Modus basierend auf einer Beziehung zwischen der eingestellten Temperatur, dem Temperaturänderungstrend und der Auslasslufttemperatur das Verfahren ferner Folgendes umfasst:
Beenden des automatischen zugfreien Modus als Reaktion auf das Erhalten eines Befehls zum Ausschalten des automatischen zugfreien Modus oder eines Befehls zum Umschalten in einen anderen Modus.

9. Verfahren gemäß Anspruch 1, **dadurch gekennzeichnet, dass** das Verfahren ferner Folgendes umfasst:

als Reaktion darauf, dass die Klimaanlage in den automatischen zugfreien Modus eintritt, Einstellen eines horizontalen Luftführungsstreifens nach oben auf einen ersten voreingestellten Winkel innerhalb einer ersten voreingestellten Dauer; und
Erhalten der eingestellten Temperatur der Klimaanlage, des Temperaturänderungstrends und der Auslasslufttemperatur gemäß der voreingestellten Frequenz am Ende der ersten voreingestellten Dauer, und Durchführen der entsprechenden Steueraktion für den automatischen zugfreien Modus basierend auf der Beziehung zwischen der eingestellten Temperatur, dem Temperaturänderungstrend und der Auslasslufttemperatur.

10. Verfahren gemäß Anspruch 1, **dadurch gekennzeichnet, dass** das Verfahren ferner Folgendes umfasst:

als Reaktion darauf, dass die Klimaanlage in den automatischen zugfreien Modus eintritt, Erhalten der eingestellten Temperatur der Klimaanlage, des Temperaturänderungstrends und der Auslasslufttemperatur gemäß der voreingestellten Frequenz und Ausführen der entsprechenden Steueraktion für den automatischen zugfreien Modus basierend auf der Beziehung zwischen der eingestellten Temperatur, dem Temperaturänderungstrend und der Auslasslufttemperatur innerhalb einer zweiten voreingestellten Dauer; und

Einstellen eines horizontalen Luftleitstreifens nach oben auf einen zweiten voreingestellten Winkel am Ende der zweiten voreingestellten Dauer.

11. Verfahren gemäß Anspruch 1, **dadurch gekennzeichnet, dass** das Verfahren ferner Folgendes umfasst:

als Reaktion darauf, dass die Klimaanlage in den automatischen zugfreien Modus eintritt, Erhalten der eingestellten Temperatur der Klimaanlage, des Temperaturänderungstrends und der Auslasslufttemperatur gemäß der voreingestellten Frequenz; und
abwechselndes Ausführen, gemäß einer vorgegebenen Regel, der entsprechenden Steueraktion für den automatischen zugfreien Modus und eines Vorgangs zum Einstellen des Luftleitstreifens nach oben auf einen dritten vorgegebenen Winkel, basierend auf der Beziehung zwischen der eingestellten Temperatur, dem Temperaturänderungstrend und der Auslasslufttemperatur.

12. Vorrichtung zur Steuerung eines automatischen zugfreien Modus, wobei sich der zugfreie Modus darauf bezieht, dass die Innentemperatur gesunken ist und eine eingestellte Temperatur einer Klimaanlage erreicht hat oder sich dieser nähert, eine Gebläsedrehzahl und eine Kompressorfrequenz der Klimaanlage so gesteuert werden, dass sie abnehmen, um die aktuelle Innentemperatur aufrechtzuerhalten und das Gefühl des Benutzers von kaltem Wind zu minimieren, **dadurch gekennzeichnet, dass** die Vorrichtung einen Speicher (1005), einen Prozessor (1001) und ein vom Prozessor (1001) ausführbares und im Speicher (1005) gespeichertes Programm zur Steuerung eines automatischen zugfreien Modus umfasst, wobei das Programm, wenn es vom Prozessor (1001) ausgeführt wird, die Operationen des Verfahrens gemäß einem der Ansprüche 1 bis 11 durchführt.

13. Computerlesbares Speichermedium, **dadurch gekennzeichnet, dass** das computerlesbare Speichermedium ein Programm zum Steuern eines automatischen zugfreien Modus speichert, wobei sich der zugfreie Modus darauf bezieht, dass die Innentemperatur gesunken ist und eine eingestellte Temperatur einer Klimaanlage erreicht hat oder sich dieser nähert, eine Gebläsedrehzahl und eine Kompressorfrequenz der Klimaanlage so gesteuert werden, dass sie abnehmen, um die aktuelle Innentemperatur aufrechtzuerhalten und das Gefühl des Benutzers von kaltem Wind zu minimieren, wobei das Programm, wenn es von einem Prozessor ausgeführt wird, die Schritte des Verfahrens gemäß einem der Ansprüche 1 bis 11 durchführt.

## Revendications

1. Méthode de contrôle d'un mode automatique sans brise, dans lequel le mode sans brise se réfère à une température intérieure qui a chuté, atteignant ou approchant une température de consigne d'un climatiseur, une vitesse de ventilateur et une fréquence de compresseur du climatiseur sont contrôlées pour diminuer, de manière à maintenir la température intérieure actuelle et à minimiser la sensation de vent froid de l'utilisateur, **caractérisée en ce que** la méthode comprend :

   en réponse à l'entrée du climatiseur dans le mode automatique sans brise, l'obtention (S10) d'un premier paramètre de fonctionnement intérieur, à savoir une température ambiante, et d'un second paramètre de fonctionnement intérieur, à savoir une température du serpentin d'évaporation, selon une fréquence prédéfinie, et l'obtention d'une température de sortie d'air basée sur le premier paramètre de fonctionnement intérieur et le second paramètre de fonctionnement intérieur ;
   déterminer (S20) une tendance de changement de température actuelle en fonction du premier paramètre de fonctionnement intérieur ; et
   obtenir (S30) une température de consigne du climatiseur et effectuer une action de contrôle correspondante pour le mode automatique sans brise en fonction d'une relation entre la température de consigne, la tendance de changement de température et la température de l'air de sortie.

2. La méthode de la revendication 1, **caractérisée en ce que**, avant l'opération (S10) consistant, en réponse à l'entrée du climatiseur dans le mode automatique sans brise, à obtenir le premier paramètre de fonctionnement intérieur et le second paramètre de fonctionnement intérieur selon une fréquence prédéfinie, et à obtenir la température de l'air de sortie sur la base du premier paramètre de fonctionnement intérieur et du second paramètre de fonctionnement intérieur, la méthode comprend en outre :

   en réponse à la réception d'une commande d'activation du mode automatique sans brise, obtenir (S40) la température de consigne du climatiseur et le premier paramètre de fonctionnement intérieur, et déterminer si une relation entre la température de consigne et le premier paramètre de fonctionnement intérieur satisfait à une condition prédéfinie ; et
   passer (S50) en mode automatique sans brise

   en réponse à la détermination que la relation entre la température de consigne et le premier paramètre de fonctionnement intérieur satisfait à la condition prédéfinie.

3. La méthode de la revendication 2, **caractérisée en ce que**, après l'opération (S40) consistant, en réponse à la réception d'une commande d'activation du mode automatique sans brise, à obtenir la température de consigne du climatiseur et le premier paramètre de fonctionnement intérieur, et à déterminer si une relation entre la température de consigne et le premier paramètre de fonctionnement intérieur satisfait à une condition prédéfinie, la méthode comprend en outre :
   le maintien d'un mode actuel, en réponse à la détermination que la relation entre la température de consigne et le premier paramètre de fonctionnement intérieur ne satisfait pas à la condition prédéfinie.

4. La méthode de la revendication 1, **caractérisée en ce que** l'opération (S20) de détermination d'une tendance actuelle de changement de température basée sur le premier paramètre de fonctionnement intérieur comprend :

   déterminer (S21) si un premier paramètre de fonctionnement intérieur obtenu actuellement est plus petit qu'un premier paramètre de fonctionnement intérieur obtenu précédemment, après avoir obtenu les premiers paramètres de fonctionnement intérieur selon la fréquence prédéfinie ;
   déterminer (S22) que la tendance actuelle du changement de température est une tendance à la baisse, en réponse à la détermination que le premier paramètre de fonctionnement intérieur obtenu actuellement est plus petit que le premier paramètre de fonctionnement intérieur obtenu précédemment.

5. La méthode de la revendication 4, **caractérisée en ce que**, après l'opération (S21) consistant à déterminer si le premier paramètre de fonctionnement intérieur actuellement obtenu est plus petit que le premier paramètre de fonctionnement intérieur précédemment obtenu, après avoir obtenu les premiers paramètres de fonctionnement intérieur selon la fréquence prédéfinie, la méthode comprend en outre :
   déterminer que la tendance actuelle du changement de température est une tendance à la hausse, en réponse à la détermination que le premier paramètre de fonctionnement intérieur obtenu actuellement est plus grand que le premier paramètre de fonctionnement intérieur obtenu précédemment.

6. La méthode de la revendication 1, **caractérisée en ce que** l'opération (S30) d'obtention d'une température de consigne du climatiseur et d'exécution d'une action de commande correspondante pour le mode automatique sans brise sur la base d'une relation entre la température de consigne, la tendance de changement de température et la température de l'air de sortie comprend :

obtenir (S31) la température de consigne du climatiseur et déterminer si la tendance actuelle du changement de température est une tendance à la baisse ; et
ajuster (S32) un état de mouvement d'une bande de guidage d'air, une fréquence de compresseur et une vitesse de ventilateur en fonction de la température de consigne et de la température de l'air de sortie, en réponse à une détermination que la tendance actuelle de changement de température est une tendance à la baisse.

7. La méthode de la revendication 6, **caractérisée en ce que**, après l'opération (S31) d'obtention de la température de consigne du climatiseur et de détermination si la tendance actuelle du changement de température est une tendance à la baisse, la méthode comprend en outre :
ajuster l'état de mouvement de la bande de guidage d'air, la fréquence du compresseur et la vitesse du ventilateur en fonction de la température de consigne et de la température de l'air de sortie, en réponse à la détermination que la tendance actuelle de changement de température est une tendance à la hausse.

8. La méthode de la revendication 1, **caractérisée en ce que**, après l'opération (S30) d'obtention d'une température de consigne du climatiseur et d'exécution d'une action de contrôle correspondante pour le mode automatique sans brise sur la base d'une relation entre la température de consigne, la tendance de changement de température et la température de l'air de sortie, la méthode comprend en outre :
quitter le mode automatique sans brise, en réponse à la réception d'une commande de désactivation du mode automatique sans brise ou d'une commande de passage à un autre mode.

9. La méthode de la revendication 1, **caractérisée par le fait que** la méthode comprend en outre :

en réponse à l'entrée du climatiseur dans le mode automatique sans brise, le réglage d'une bande horizontale de guidage de l'air vers le haut à un premier angle prédéfini dans une première durée prédéfinie ; et
obtenir la température de consigne du climatiseur, la tendance de changement de température et la température de l'air de sortie selon la fréquence prédéfinie à la fin de la première durée prédéfinie, et effectuer l'action de contrôle correspondante pour le mode automatique sans brise sur la base de la relation entre la température de consigne, la tendance de changement de température et la température de l'air de sortie.

10. La méthode de la revendication 1, **caractérisée par le fait que** la méthode comprend en outre :

en réponse à l'entrée du climatiseur dans le mode automatique sans brise, obtenir la température de consigne du climatiseur, la tendance de changement de température et la température de l'air de sortie selon la fréquence prédéfinie, et effectuer l'action de contrôle correspondante pour le mode automatique sans brise sur la base de la relation entre la température de consigne, la tendance de changement de température et la température de l'air de sortie au cours d'une deuxième durée prédéfinie ; et
ajuster une bande horizontale de guidage de l'air vers le haut à un deuxième angle prédéfini à la fin de la deuxième durée prédéfinie.

11. La méthode de la revendication 1, **caractérisée par le fait que** la méthode comprend en outre :

en réponse à l'entrée du climatiseur dans le mode automatique sans brise, obtenir la température de consigne du climatiseur, la tendance de changement de température et la température de l'air de sortie en fonction de la fréquence prédéfinie ; et
exécuter alternativement, selon une règle prédéfinie, l'action de commande correspondante pour le mode automatique sans brise et une opération d'ajustement de la bande de guidage d'air vers le haut à un troisième angle prédéfini sur la base de la relation entre la température de consigne, la tendance de changement de température et la température de l'air de sortie.

12. Dispositif de commande du mode automatique sans brise, dans lequel le mode sans brise signifie qu'une fois que la température intérieure a chuté, atteignant ou approchant une température de consigne d'un climatiseur, la vitesse du ventilateur et la fréquence du compresseur du climatiseur sont commandées pour diminuer, de manière à maintenir la température intérieure actuelle et à minimiser la sensation de vent froid ressentie par l'utilisateur, **caractérisé en ce que** le dispositif comprend une mémoire (1005), un processeur (1001), et un programme de commande d'un mode automatique sans brise exécutable par le processeur (1001) et stocké dans la mémoire (1005), le programme, lorsqu'il est exécuté par le processeur (1001), effectue les opérations du procédé selon l'une quelconque des revendications 1 à 11.

13. Support de stockage lisible par ordinateur, **caractérisé en ce que** le support de stockage lisible par ordinateur stocke un programme pour contrôler un mode automatique sans brise, dans lequel le mode sans brise se réfère à ce que, lorsque la température intérieure a chuté, atteignant ou approchant une température de consigne d'un climatiseur, une vitesse de ventilateur et une fréquence de compresseur du climatiseur sont contrôlées pour diminuer, de manière à maintenir la température intérieure actuelle et à minimiser la sensation de vent froid de l'utilisateur, le programme, lorsqu'il est exécuté par un processeur, exécute les étapes de la méthode selon l'une quelconque des revendications 1 à 11.

1005

1001

1002

processor

user interface

1003

1004

network
interface

operating system

network
communication
module

user interface module

program for
controlling
automatic breezeless
mode

memory

FIG. 1

S10

in response to an air conditioner entering an automatic breezeless
mode, obtaining a first indoor operating parameter and a second
indoor operating parameter according to a preset frequency, and
obtaining an outlet air temperature based on the first indoor
operating parameter and the second indoor operating parameter

S20

determining a current temperature change trend based on the first
indoor operating parameter

S30

obtaining a set temperature of the air conditioner, and performing a
corresponding control action for the automatic breezeless mode
based on a relationship among the set temperature, the temperature
change trend, and the outlet air temperature

FIG. 2

FIG. 3

FIG. 4

FIG. 5

FIG. 6

S40 —— in response to receiving a command of turning on the automatic breezeless mode, obtaining the set temperature of the air conditioner and the first indoor operating parameter, and determining whether a relationship between the set temperature and the first indoor operating parameter satisfies a preset condition

S50 —— entering the automatic breezeless mode, in response to a determination that the relationship between the set temperature and the first indoor operating parameter satisfies the preset condition

S10 —— in response to an air conditioner entering an automatic breezeless mode, obtaining a first indoor operating parameter and a second indoor operating parameter according to a preset frequency, and obtaining an outlet air temperature based on the first indoor operating parameter and the second indoor operating parameter

S20 —— determining a current temperature change trend based on the first indoor operating parameter

S30 —— obtaining a set temperature of the air conditioner, and performing a corresponding control action for the automatic breezeless mode based on a relationship among the set temperature, the temperature change trend, and the outlet air temperature

FIG. 7

S21　determining whether the currently obtained first indoor operating parameter is smaller than the previously obtained first indoor operating parameter, after obtaining the first indoor operating parameters according to the preset frequency

S22　determining the current temperature change trend to be a downward trend, in response to a determination that the currently obtained first indoor operating parameter is smaller than the previously obtained first indoor operating parameter

FIG. 8

S31　obtaining the set temperature of the air conditioner, and determining whether the current temperature change trend is the downward trend

S32　adjusting a motion state of an air deflector, a compressor frequency, and a fan speed based on the set temperature and the outlet air temperature, in response to a determination that the current temperature change trend is the downward trend

FIG. 9

**REFERENCES CITED IN THE DESCRIPTION**

**Patent documents cited in the description**

- JP 6065959 B
- CN 104949294 A